# EUROPEAN PATENT APPLICATION

(11) **EP 4 604 297 A1**
(43) Date of publication of application: **20.08.2025**
(21) Application number: 24785121.5
(22) Date of filing: 29.03.2024
(51) Int. Cl.: H01M 50/367, H01M 50/211

(54) **BATTERY PACK AND DEVICE INCLUDING SAME**

(30) Priority: 06.04.2023 KR 20230045592
(71) Applicant: LG Energy Solution, Ltd., Seoul 07335 (KR)
(72) Inventor: JUNG, Seyun, Daejeon 34122 (KR); SEO, Sung Won, Daejeon 34122 (KR); LEE, Inje, Daejeon 34122 (KR); KIM, Sung Tae, Daejeon 34122 (KR); TANNENBERGER, Guenter, 85123 Pobenhausen (DE); HARASZTOSI, Uwe, 74172 Neckarsulm (DE); WASSERMANN, Thomas, 74321 Bietigheim-Bissingen (DE); MUHAMMAD, Rashid, Daejeon 34122 (KR)
(74) Representative: Plasseraud IP
(86) International application number: PCT/KR2024/004099
(87) International publication number: WO 2024/210414

(57) **Abstract**

A battery pack according to an embodiment of the present disclosure includes: a pack frame in which a plurality of battery modules are respectively mounted on a plurality of module sections that are partitioned from each other; a flow path frame located at a lower part of the pack frame; and at least one first discharge part located on one side surface of the pack frame, wherein the plurality of module sections includes a first module section and a second module section that are arranged side by side in one direction, with the second module section being located more adjacent to the first discharge part than the first module section, wherein the flow path frame includes a first flow path part located at a lower part of the first module section and a second flow path part located at a lower part of the second module section, and wherein the second lower venting flow path formed in the second flow path part is formed to be longer than the first lower venting flow path formed in the first flow path part.

## Description

### [TECHNICAL FIELD]

### Cross Citation with Related Application(s)

This application claims the benefit of Korean Patent Application No. 10-2023-0045592 filed on April 6, 2023 in the Korean Intellectual Property Office, the disclosure of which is incorporated herein by reference in its entirety.

The present disclosure relates to a battery pack and a device containing the same, and more specifically, to a battery pack in which a venting flow path formed in a pack frame is designed in consideration of a position of the battery module and a distance between the battery module and the discharge part, and a device containing the same.

### [BACKGROUND]

Secondary batteries, which are easily applicable to various product groups and have electrical characteristics such as high energy density, are universally applied not only for a portable device but also for an electric vehicle or a hybrid electric vehicle, an energy storage system or the like, which is driven by an electric driving source. Such a secondary battery is attracting attention as a new environment-friendly energy source for improving energy efficiency since it gives a primary advantage of remarkably reducing the use of fossil fuels and also does not generate by-products from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

The battery pack is configured to have a structure in which a plurality of battery modules are combined. Therefore, in a case in which overvoltage, overcurrent, or overheating is applied to some of the battery modules, safety and operation efficiency of the battery pack are seriously concerned. In particular, the capacity of the battery pack tends to increase gradually in order to improve mileage, and as the energy inside the pack increases accordingly, it is necessary to design a structure that satisfies strengthened safety standards and secures the safety of the vehicle and driver.

In this regard, in order to prevent in advance thermal runaway within the battery pack and heat propagation phenomena between battery cells, recently, as gas and flame generated in some battery cells are effectively discharged through a discharge device, the necessity to develop a battery pack that can minimize the damage is emerging.

In particular, when gas and flame are generated in a battery module located adjacent to the venting device formed in the battery pack, the distance between the battery module and the venting device may be relatively very close, and the venting flow path through which the gas and flame flow from the battery module to the venting device may be relatively short.

At this time, the gas and flame generated in the relevant battery module are not sufficiently cooled, so the gas and flame under a state of high temperature may be discharged to the outside, which may cause an external flame and explosion. Therefore, there is a need to develop a battery pack that includes a venting flow path for gas and flame designed in consideration of the position of the battery module.

### [DETAILED DESCRIPTION OF THE INVENTION]

### [Technical Problem]

It is an object of the present disclosure to provide a battery pack in which a venting flow path formed in a pack frame is designed in consideration of a position of the battery module and a distance between the battery module and the discharge part, and a device comprising the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack comprising: a pack frame in which a plurality of battery modules are respectively mounted on a plurality of module sections that are partitioned from each other; a flow path frame located at a lower part of the pack frame; and at least one first discharge part located on one side surface of the pack frame, wherein the plurality of module sections includes a first module section and a second module section that are arranged side by side in one direction, with the second module section being located more adjacent to the first discharge part than the first module section, wherein the flow path frame includes a first flow path part located at a lower part of the first module section and a second flow path part located at a lower part of the second module section, and wherein the second lower venting flow path formed in the second flow path part is formed to be longer than the first lower venting flow path formed in the first flow path part.

The flow path frame includes a flow path bottom part and at least one partition wall extending from the flow path bottom part in a direction toward the pack frame, and the number of the partition walls formed in the first flow path part may be smaller than the number of the partition walls formed in the second flow path part.

The battery module is mounted on the module section in a direction in which a side surface of the battery module faces the first discharge part, and the at least one partition wall may extend along the width direction of the battery module.

The first module section includes at least one first module venting hole, and the second module section includes at least one second module venting hole, wherein the first module venting hole may penetrate toward the first flow path part, and the second module venting hole may penetrate toward the second flow path part.

A first distance between a first partition wall located most adjacent to the first module venting hole among the at least one first partition wall and the side surface of the pack frame may be larger than a second distance between a second partition wall located most adjacent to the second module venting hole among the at least one second partition wall and the side surface of the pack frame.

The first lower venting flow path may be a flow path that moves from the first module venting hole in a direction toward the first discharge part along a space partitioned by the at least one partition wall formed in the first flow path, and the second lower venting flow path may be a flow path that moves from the second module venting hole in a direction toward the first discharge part along a space partitioned by the at least one partition wall formed in the second flow path.

The first module venting hole is located adjacent to a corner of the first module section, the second module venting hole is located adjacent to a corner of the second module section, and 0the number of the second module venting hole may be smaller than the number of the first module venting hole.

The plurality of battery modules include a first battery module and a second battery module, the first battery module may be mounted on the first module section in a direction in which a side surface of the first battery module faces the first discharge part, and the second battery module may be mounted on the second module section in a direction in which a side surface of the second battery module faces the first discharge part.

The first module venting hole includes a first horizontal venting hole formed at a position adjacent to the front and rear surfaces of the first battery module, the second module venting hole includes a second horizontal venting hole formed at a position adjacent to the front and rear surfaces of the second battery module, and the number of the second horizontal venting hole may be smaller than the number of the first horizontal venting hole.

The first lower venting flow path is a path from the first horizontal venting hole to the outside surface of the first flow path part adjacent to the first discharge part, and the second lower venting flow path may be a path from the horizontal venting hole to the outside surface of the second flow path part adjacent to the first discharge part.

The pack frame further includes at least one first pack venting hole formed at a lower part of the pack frame, and the first pack venting hole may be located between one side surface of the pack frame where the first discharge part is located and the second module section.

The first flow path part and the second flow path part are communicated with each other, and the material flowing into the first lower venting flow path and the second lower venting flow path may move toward the first discharge part through the first pack venting hole.

The pack frame includes a pack bottom part that contacts the lower surface of the battery module and a frame section that surrounds the side surface of the battery module, the frame section includes a first side frame extending from an edge of the pack bottom toward the upper part, and a first internal frame located inside the first side frame, and the plurality of module sections may be partitioned from each other by the first side frame and the first internal frame.

The flow path frame includes a second side frame located at a lower part of the first side frame and a second internal frame located at a lower part of the first internal frame, and the first flow path part and the second flow path part may be partitioned from each other by the second side frame and the second internal frame.

The second internal frame includes a horizontal flow path beam extending along the width direction of the battery module, and at least two vertical flow path beams extending in a direction perpendicular to the horizontal flow path beam, and a vertical flow path beam located between a pair of module sections adjacent to each other among the at least two vertical flow path beams may include at least one communication part.

The plurality of module sections further includes a third module section that is arranged in one direction with the first module section and the second module section, the third module section is located more adjacent to the first discharge part than the second module section, the vertical flow path beam includes a first vertical flow path beam located between the lower part of the first module section and the lower part of the second module section, and a second vertical flow path beam located between the lower part of the second module section and the lower part of the third module section, and the number of the first communication part included in the first vertical flow path beam may be smaller than the number of the second communication part included in the second vertical flow path beam.

The length of the first communication part may be larger than the length of the second communication part.

The battery pack includes at least one second discharge part located on the other side of the pack frame, and the first side frame and the internal frame may include at least one frame venting hole each formed at a position of contacting an outer surface of the battery module mounted on the module section.

The first side frame and the internal frame further include at least one side venting hole each formed between the other side surface of the pack frame where the second discharge part is located and the first module section, and the battery pack may have a side venting flow path through which material flowing into the frame venting hole moves toward the second discharge part through the side venting hole.

The vertical flow path beam further includes a third vertical flow path beam formed between a side surface of the flow path frame located adjacent to the second discharge part and a lower part of the first module section, the pack frame further includes at least one second pack venting hole formed at a lower part of the pack frame, the third vertical flow path beam is formed with at least one flow path venting hole, the second pack venting hole is located between the other side surface of the pack frame where the second discharge part is located and the first module section, and the material flowing into the flow path venting hole may move toward the second discharge part through the pack venting hole.

### [Advantageous Effects]

According to embodiments, a battery pack of the present disclosure and a device comprising the same are configured such that a venting flow path formed in a pack frame is designed in consideration of a position of the battery module and a distance between the battery module and the discharge part, whereby the temperature of the high-temperature venting gas discharged from the battery module can be effectively reduced regardless of the position of the battery module.

The effects of the present disclosure are not limited to the effects mentioned above and additional other effects not mentioned above will be clearly understood from the detailed description and the accompanying drawings by those skilled in the art.

### [BRIEF DESCRIPTION OF THE DRAWINGS]

FIG. 1 is a perspective view showing a battery pack according to an embodiment of the present disclosure.
FIG. 2 is an exploded perspective view of the battery pack of FIG. 1.
FIG. 3 is a perspective view showing a state in which the upper pack frame is removed from the battery pack of FIG. 1 and the lower pack frame and the flow path frame are combined.
FIG. 4 is a top view of the lower pack frame of FIG. 3.
FIG. 5 is a top view showing a state in which the discharge part is removed from the lower pack frame of FIG. 4.
FIG. 6 is a top view of the flow path frame of FIG. 3.
FIG. 7 is a diagram showing the flow of venting gas discharged to the lower part of the battery module in a state where the lower pack frame and the flow path frame of FIG. 3 are combined.
FIG. 8 is a diagram showing the flow of venting gas discharged to the side surface of the battery module in a state where the lower pack frame and the flow path frame of FIG. 3 are combined.
FIG. 9 is a top view of a flow path frame according to another embodiment of the present disclosure.
FIG. 10 is a diagram showing the flow of venting gas discharged to the lower part of the battery module in a state where the lower pack frame of FIG. 3 and the flow path frame of FIG. 9 are combined.
FIG. 11 is a perspective view showing a battery module mounted on the battery pack of FIG. 1.
FIG. 12 is an exploded perspective view of the battery module of FIG. 11.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts that are irrelevant to the description will be omitted to clearly describe the present disclosure, and like reference numerals designate like elements throughout the description.

Further, in the drawings, the size and thickness of each element are arbitrarily illustrated for convenience of description, and thus, the present disclosure is not necessarily limited to those illustrated in the drawings. In the drawings, the thickness of layers, regions, etc. are exaggerated for clarity. In the drawings, the thicknesses of some layers and region are exaggerated for convenience of description.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, a battery pack according to embodiments of the present disclosure will be described.

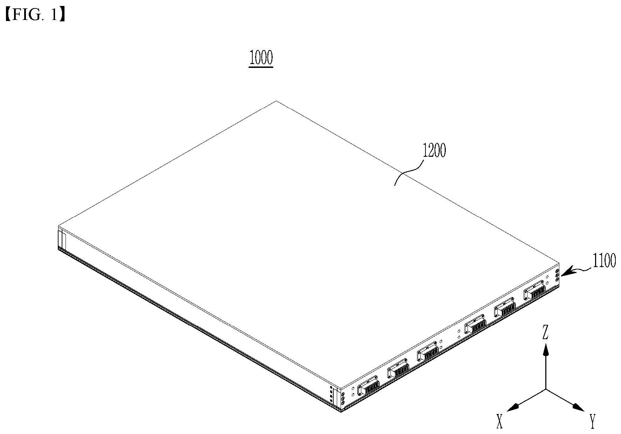

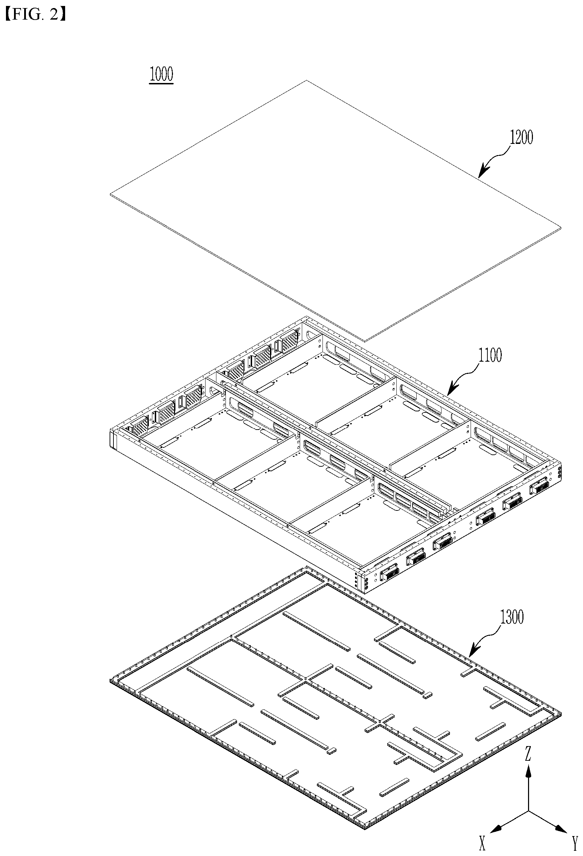

FIG. 1 is a perspective view showing a battery pack according to an embodiment of the present disclosure. FIG. 2 is an exploded perspective view of the battery pack of FIG. 1.

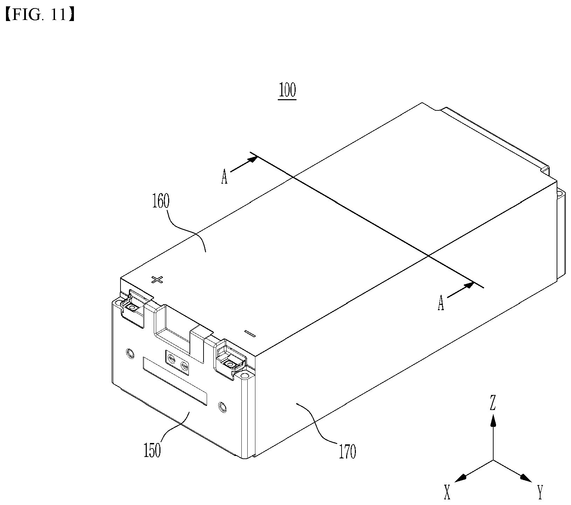

Referring to FIGS. 1 and 2, the battery pack 1000 according to an embodiment of the present disclosure may include pack frames 1100 and 1200 on which a plurality of battery modules 100 (FIG. 11) are mounted, and a flow path frame 1300 located at a lower part of the pack frames 1100 and 1200.

Herein, the pack frames 1100 and 1200 may include a lower pack frame 1100 on which a plurality of battery modules 100 (FIG. 11) are mounted, and an upper pack frame 1200 located on an upper part of the battery module 100 (FIG. 11). Herein, the lower pack frame 1100 and the upper pack frame 1200 may be configured such that surfaces in contact with each other are joined by a method such as welding or bonding, thereby sealing the inside of the battery pack 1000.

The flow path frame 1300 may form a lower venting flow path in a space formed between the flow path frame 1300 and the lower part of the pack frames 1100 and 1200. More specifically, the flow path frame 1300 may form a lower venting flow path in a space formed between the flow path frame 1300 and the lower part of the lower pack frame 1100. Therefore, in the battery pack 1000 according to the present embodiment, the gas and/or flame of the battery module 100 (FIG. 11) in which a thermal runaway phenomenon has occurred may flow through a path guided by the lower venting flow path.

Herein, the flow path frame 1300 and the lower pack frame 1100 are configured such that the surfaces in contact with each other are joined by a method such as welding or bonding, whereby the lower venting flow path formed between the flow path frame 1300 and the lower pack frame 1100 can be sealed from the outside.

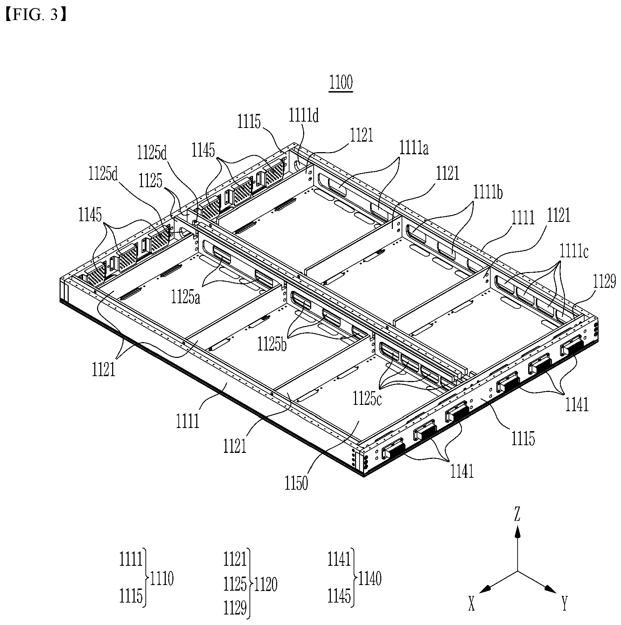

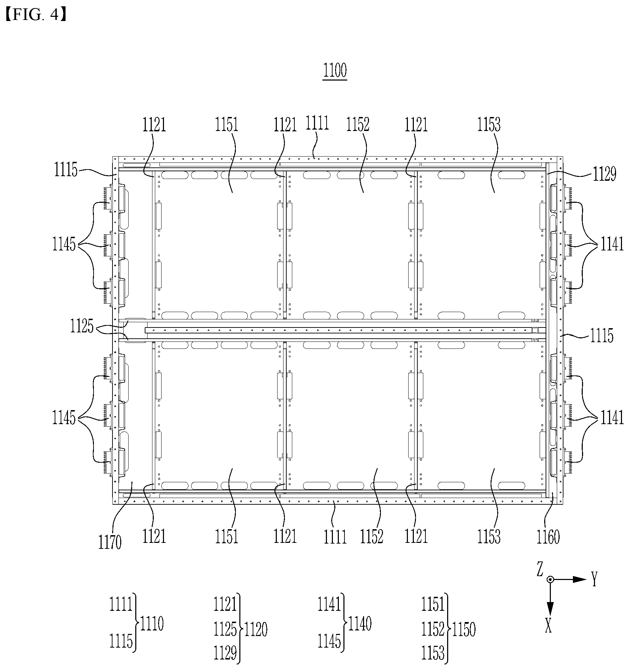

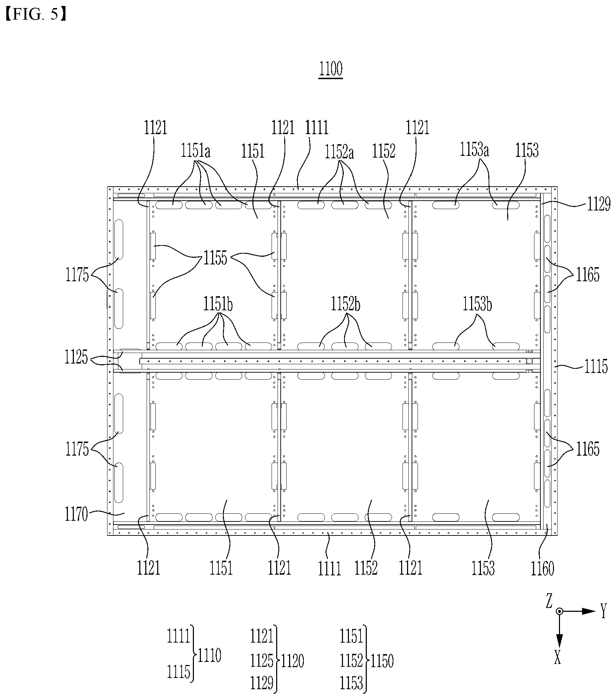

FIG. 3 is a perspective view showing a state in which the upper pack frame is removed from the battery pack of FIG. 1 and the lower pack frame and the flow path frame are combined. FIG. 4 is a top view of the lower pack frame of FIG. 3. FIG. 5 is a top view showing a state in which the discharge part is removed from the lower pack frame of FIG. 4.

Referring to FIGS. 3 and 4, the pack frames 1100 and 1200 may be respectively mounted on a plurality of module sections 1150 in which a plurality of battery modules 100 (FIG. 11) are partitioned from each other. More specifically, the lower pack frame 1100 may be formed with a plurality of module sections 1150 in which a plurality of battery modules 100 (FIG. 11) are partitioned from each other.

The pack frames 1100 and 1200 may include a pack bottom part that contacts the lower surface of the battery module 100 (FIG. 11) and frame sections 1110 and 1120 that surround the side surfaces of the battery module. More specifically, the lower pack frame 1100 may include a bottom part of the lower pack frame 1100 that contacts the lower surface of the battery module 100 (FIG. 11), and frame sections 1110 and 1120 that surround the side surfaces of the battery module. Herein, the bottom part of the lower pack frame 1100 and the frame sections 1110 and 1120 are integrated with each other, or may be fixed to each other by separate fastening methods such as welding or bonding.

The frame sections 1110 and 1120 may include a first side frame 1110 that extends from the edge of the pack bottom part toward the upper pack frame 1200, and a first internal frame 1120 located inside the first side frame 1110.

As an example, the frame sections 1100 and 1200 may be made of an insulating member. As an example, the frame sections 1100 and 1200 may be composed of an aluminum extrusion structure. As another example, the frame sections 1100 and 1200 may be made of a dissimilar metal bonding material such as clad metal, or may be a structure containing an insulating material such as aerogel or EPP(Expanded Polypropylene) foam. As an example, the frame sections 1100 and 1200 may be a structure containing materials such as silicon foam, mica, and glass fiber pad. However, the present disclosure is not limited thereto, and the frame sections 1100 and 1200 can be used without limitation as long as they are made of a heat-insulating material having a prescribed rigidity.

The first side frame 1110 may include a pair of first horizontal frames 1111 that extend along the longitudinal direction (y-axis direction) among the edges of the lower pack frame 1100, and a pair of first vertical frames 1115 that extend along the width direction (x-axis direction) among the edges of the lower pack frame 1100. Herein, the pair of first horizontal frames 1111 and the pair of first vertical frames 1115 may be integrated with each other, or may be fixed to each other by a separate fastening method such as welding or bonding.

The first internal frame 1120 may include at least two vertical beams 1121 and an outermost vertical beam 1129 that extend along the width direction (x-axis direction) of the lower pack frame 1100. Further, the first internal frame 1120 may include a horizontal beam 1125 that extend in a direction perpendicular to the vertical beam 1121 and the outermost vertical beam 1129 (y-axis direction). As an example, the vertical beam 1121 and the outermost vertical beam 1129 include a pair of first vertical beams and second vertical beams with the horizontal beam 1125 interposed therebetween, so that the first vertical beam and the second vertical beam may each be attached to the horizontal beam 1125. Herein, at least two vertical beams 1121 and horizontal beams 1125 are integrated with each other, or may be fixed to each other by separate fastening methods such as welding or bonding.

More specifically, the lengths of the vertical beam 1121, the outermost vertical beam 1129 and the horizontal beam 1125, and the spacing between vertical beams 1121 adjacent to each other among at least two vertical beams 1121 may be adjusted depending on the size of the battery module 100 (FIG. 11).

Accordingly, in the battery pack 1000 according to the present embodiment, the plurality of module sections 1150 may be partitioned from each other by a first side frame 1110 and a first internal frame 1120. More specifically, the plurality of battery modules 100 (FIG. 11) may be located separately from each other by the first side frame 1110 and the first internal frame 1120, and can effectively prevent heat propagation phenomena between adjacent battery modules 100 even if ignition phenomena occur in some battery modules 100.

Further, the battery pack 1000 according to the present embodiment may include at least one discharge part 1140 located on one side surface of the pack frames 1100 and 1200. More specifically, at least one discharge part 1140 may be formed on one side surface of the lower pack frame 1100. On one side of the lower pack frame 1100, at least one discharge part 1140 may be spaced apart at a predetermined interval as shown in FIGS. 3 and 4.

The discharge part 1140 may include at least one first discharge part 1141 located on one side surface of the pack frames 1100 and 1120, and at least one second discharge part 1145 located on the other side of the pack frames 1100 and 1200. More specifically, at least one first discharge part 1141 may be formed on one of the two side surfaces of the lower pack frame 1100 facing each other, and at least one second discharge part 1145 may be formed on the other side surface.

The discharge part 1140 may rupture when the pressure inside the battery pack 1000 reaches a certain level or higher. More specifically, the discharge part 1140 may include a rupture surface (not shown) configured to rupture when the pressure of the inflowing gas exceeds a certain pressure, like a rupture disk.

However, the structure of the discharge part 1140 is not limited thereto, and may be included in the present embodiment as long as it is configured to communicate with one side surface of the pack frame 1100 and 1200 and allows internal gas to be discharged to the outside.

In the battery pack 1000 according to the present embodiment, a mesh member or a fire extinguishing member may be additionally disposed at a position adjacent to the discharge part 1140. More specifically, the mesh member and/or the fire extinguishing member may be located inside the battery pack 1000, and disposed on a flow path toward the discharge part 1140. As an example, the mesh member may be made of a net-like mesh material, and the fire extinguishing member may be made of a material containing a fire extinguishing agent. Therefore, the gas and/or flame of the battery module 100 (FIG. 11) in which a thermal runaway phenomenon has occurred is not immediately discharged to the discharge part 1140, and the mesh member and/or the fire extinguishing member may filter ash or flame contained in the gas and/or flame.

Referring to FIGS. 3 and 4, the pack frames 1100 and 1200 may include a first space part 1160 and a second space part 1170 located between the first internal frame 1120 and the side surfaces of the pack frames 1100 and 1200. More specifically, in the pack frames 1100 and 1200, the first space part 1160 may be a space formed between the outermost vertical beam 1129 and one side surface of the pack frame 1100 and 1200 where the first discharge part 1141 are located. Further, in the pack frames 1100 and 1200, the second space part 1170 is a space formed between the vertical beams 1121 located most adjacent to the other side surface of the pack frame 1100, 1200 where the second discharge part 1145 is located among the at least two vertical beams 1121.

The first space part 1160 may be an empty space in which no separate components are mounted. Further, the second space part 1170 may be mounted with at least a part of other electrical components and control systems such as BMS. As an example, as shown in FIGS. 3 and 4 , the width of the first space part 1160 may be smaller than the width of the second space part 1170.

Referring to FIG. 5, in the battery pack 1000 according to the present embodiment, the pack frames 1100 and 1200 may include at least one or more module venting holes 1151a, 1151b, 1152a, 1152b, 1153a, 1153b and 1155 formed in the module section 1150. More specifically, the lower pack frame 1100 may configured such that one or more module venting holes 1151a, 1151b, 1152a, 1152b, 1153a, 1153b and 1155 are formed in each of the plurality of module sections 1150.

In the battery pack 1000 according to the present embodiment, the material discharged from the battery module 100 (FIG. 11) to the module venting holes 1151a, 1151b, 1152a, 1152b, 1153a, 1153b and 1155 may move to the flow path frame 1300 (FIG. 2). In addition, as will be described below, the battery pack 1000 according to the present embodiment may have a lower venting flow path that moves to the first discharge part 1141 along a space partitioned by at least one or more partition walls 1351a, 1352a and 1353a formed in the flow path frame 1300 (FIG. 2).

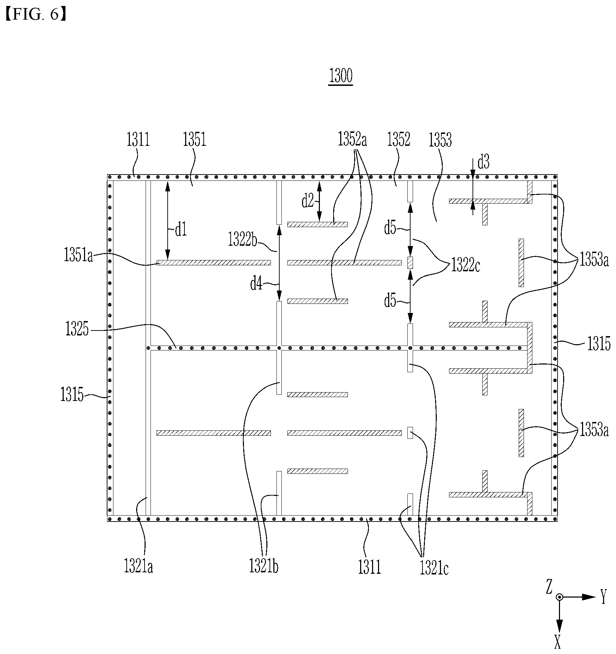

More specifically, in the lower pack frame 1100, the module venting holes 1151a, 1151b, 1152a, 1152b, 1153a, 1153b and 1155 may penetrate toward the flow path frame 1300. More specifically, the module venting holes 1151a, 1151b, 1152a, 1152b, 1153a, 1153b and 1155 may be penetrated toward respective flow path parts 1351, 1352 and 1353 (FIG. 6). That is, the module venting holes 1151a, 1151b, 1152a, 1152b, 1153a, 1153b and 1155 may communicate with the flow path frame 1300. In addition, the module venting holes 1151a, 1151b, 1152a, 1152b, 1153a, 1153b and 1155 may be located adjacent to the corners of the module section 1150.

As an example, in the module section 1150, as shown in FIGS. 3 to 5, the module venting holes 1151a, 1151b, 1152a, 1152b, 1153a, 1153b and 1155 may be formed adjacent to the internal frame 1120. In addition, although not shown in FIGS. 3 to 5, the module venting holes 1151a, 1151b, 1152a, 1152b, 1153a, 1153b and 1155 may be located between the edge of the battery module 100 (FIG. 11) mounted on the module section 1150 and the internal frame 1120. Herein, the module venting holes 1151a, 1151b, 1152a, 1152b, 1153a, 1153b and 1155 may include horizontal venting holes 1151a, 1151b, 1152a ,1152b, 1153a and 1153b formed at a position adjacent to the horizontal beam 1125, and a vertical venting hole 1155 formed at a position adjacent to the vertical beam 1121.

Accordingly, in the battery pack 1000 according to the present embodiment, the module venting holes 1151a, 1151b, 1152a, 1152b, 1153a, 1153b and 1155 can easily discharge materials generated in the battery module 100 (FIG. 11). In particular, by-products such as ash generated in the battery module 100 (FIG. 11) may sink to the bottom part of the lower pack frame 1100, and the module venting holes 1151a, 1151b, 1152a, 1152b, 1153a, 1153b and 1155 can discharge the gas and/or flame of the battery module (100, FIG. 11) in which a thermal runaway phenomenon has occurred toward the flow path frame 1300.

More specifically, the plurality of module sections 1150 may include a first module section 1151, a second module section 1152, and a third module section 1153. Herein, the first module section 1151, the second module section 1152 and the third module section 1153 may be arranged side by side in one direction. In addition, the plurality of battery modules 100 (FIG. 11) includes a first battery module, a second battery module, and a third battery module, wherein the first battery module, the second battery module, and the third battery module may be mounted on the first module section 1151, the second module section 1152, and the third module section 1153, respectively. Herein, the second module section 1152 is located more adjacent to the first discharge part 1141 than the first module section 1151, and the third module section 1153 may be located more adjacent to the first discharge part 1141 than the second module section 1152.

As an example, the second battery module and the third battery module may be mounted on the module section 1150 in a direction in which a side surface of the battery module 100 (FIG. 11) faces the first discharge part 1141. Herein, in the module section 1150, the horizontal venting holes 1151a, 1151b, 1152a, 1152b, 1153a and 1153b may be formed at positions corresponding to the front and rear surfaces of the battery module 100 (FIG. 11), and the vertical venting hole 1155 may be formed at a position corresponding to both side surfaces of the battery module 100 (FIG. 11).

However, the positions of the module venting holes 1151a, 1151b, 1152a, 1152b, 1153a, 1153b and 1155 are not limited thereto, and may change depending on the arrangement of the battery module 100 (FIG. 11).

Accordingly, the module venting holes 1151a, 1151b, 1152a, 1152b, 1153a, 1153b and 1155 can easily discharge the gas and flame discharged from the front and rear side surfaces of the battery module 100 (FIG. 11). In particular, in the case of the battery module 100 (FIG. 11), in view of the fact that the venting parts are generally formed on the front and rear surfaces of the battery module 100 (FIG. 11), the horizontal venting holes 1151a, 1151b, 1152a, 1152b, 1153a and 1153b can effectively discharge the gas and flame discharged in the battery module 100 (FIG. 11).

In addition, the module venting holes 1151a, 1151b, 1152a, 1152b, 1153a, 1153b and 1155 may include first module venting holes 1151a, 1151b and 1155 formed in the first module section 1151, second module venting holes 1152a, 1152b and 1155 formed in the second module section 1152, and third module venting holes 1153a, 1153b and 1155 formed in the third module section 1153. Further, the first module venting holes 1151a, 1151b and 1155 may include first horizontal venting holes 1151a and 1151b and vertical venting holes 1155, the second module venting holes 1152a, 1152b and 1155 may include second horizontal venting holes 1152a and 1152b and vertical venting holes 1155, and the third module venting holes 1153a, 1153b and 1155 may include third horizontal venting holes 1153a and 1153b and vertical venting holes 1155.

Further, the number of the second module venting holes 1152a and 1152b formed at positions corresponding to the front and rear surfaces of the second battery module mounted on the second module section 1152 may be smaller than the number of the first module venting holes 1151a and 1151b formed at positions corresponding to the front and rear surfaces of the first battery module mounted on the first module section 1151. Further, the number of the third module venting holes 1153a and 1153b formed at positions corresponding to the front and rear surfaces of the third battery module mounted on the third module section 1153 may be smaller than the number of the second module venting holes 1152a and 1152b formed at positions corresponding to the front and rear surfaces of the second battery module mounted on the second module section 1152.

More specifically, as shown in FIGS. 3 to 5, the number of the second horizontal venting holes 1152a and 1152b formed in the second module section 1152 may be smaller than the number of the first horizontal venting holes 1151a and 1151b formed in the first module section 1151, and the number of the third horizontal venting holes 1153a and 1153b formed in the third module section 1153 may be smaller than the number of the second horizontal venting holes 1152a and 1152b formed in the second module section 1152. That is, in the battery pack 1000 according to the present embodiment, the number of the module venting holes 1151a, 1151b, 1152a, 1152b, 1153a, 1153b and 1155 formed in each module section 1150 may be reduced as the module section is located more adjacent to the first discharge part 1141.

That is, the number of the module venting holes 1151a, 1151b, 1152a, 1152b, 1153a, 1153b and 1155 is reduced as the module section 1150 on which the battery module 100 (FIG. 11) is mounted is more adjacent to the first discharge part 1141. As the module section is located more adjacent to the first discharge part 1141, the speed at which gas and/or flame is discharged through the module venting holes 1151a, 1151b, 1152a, 1152b, 1153a, 1153b and 1155 can be reduced.

Accordingly, in the battery pack 1000 according to the present embodiment, the number of the module venting holes 1151a, 1151b, 1152a, 1152b, 1153a, 1153b and 1155 varies depending on the position of the module section 1150 on which the battery module 100 (FIG. 11) is mounted, thereby being able to control the discharging speed from the battery module 100 (FIG. 11) to the module vent holes 1151a, 1151b, 1152a, 1152b, 1153a, 1153b and 1155. In other words, by adjusting the number of the module venting holes 1151a, 1151b, 1152a, 1152b, 1153a, 1153b and 1155, it is possible to control the speed at which the gas and/or flame of the battery module 100 (FIG. 11) in which a thermal runaway phenomenon has occurred flow into the flow path frame 1300.

Referring to FIG. 5, the pack frames 1100 and 1200 may include pack venting holes 1165 and 1175 formed in the lower parts of the pack frames 1100 and 1200. In other words, the lower pack frame 1100 may include pack venting holes 1165 and 1175 formed on the bottom surface of the lower pack frame 1100.

More specifically, the pack frames 1100 and 1200 may include at least one or more pack venting holes 1165 and 1175 located between a module section 1150 located adjacent to the side surface of the pack frames 1100 and 1200 among the plurality of module sections 1150 and the side surface of the pack frames 1100 and 1200.

The at least one or more pack venting holes 1165 and 1175 may include at least one first pack venting hole 1165 formed between the module section 1150 located most adjacent to the first discharge part 1141 among the plurality of module sections 1150 and the side surface of the pack frames 1100 and 1200 where the first discharge part 1141 is located. More specifically, the first pack venting hole 1165 may be formed in a first space part 1160 of the pack frames 1100 and 1200.

In addition, at least one or more pack venting holes 1165 and 1175 may include at least one second pack venting hole 1175 formed between a module section 1150 located most adjacent to the second discharge part 1145 and a side surface of the pack frames 1100 and 1200 where the second discharge part 1145 is located. More specifically, the second pack venting hole 1175 may be formed in a second space part 1170 of the pack frames 1100 and 1200.

More specifically, the pack frames 1100 and 1200 may include an outermost vertical beam 1129 that is located between a third module section 1153 located most adjacent to the first discharge part 1141 and one side surface of the pack frames 1100 and 1200 where the first discharge part 1141 is located. Herein, at least one first pack venting hole 1165 may be located between the outermost vertical beam 1129 and one side surface of the pack frames 1100 and 1200 where the first discharge part 1141 is located.

Referring to FIGS. 4 and 5, in the lower venting flow path where gas/and flame moves from the module venting holes 1151a, 1151b, 1152a, 1152b, 1153a, 1153b and 1155 to the flow path frame 1300, materials that have moved inside the flow path frame 1300 may move toward the first discharge part 1141 through the first pack venting hole 1165.

Accordingly, in the battery pack 1000 according to the present embodiment, the gas and/or flame of the battery module 100 (FIG. 11) in which a thermal runaway phenomenon has occurred may be sufficiently cooled while flowing inside the flow path frame 1300. The cooled gas and/or flame may be then discharged through the first pack venting hole 1165 and the first discharge part 1141, thereby preventing the occurrence of external flames and explosions.

FIG. 6 is a top view of the flow path frame of FIG. 3.

Referring to FIG. 6, in the battery pack 1000 according to the present embodiment, the flow path frame 1300 include a flow path bottom part and at least one or more partition walls 1351a, 1352a and 1353a extending from the flow path bottom part in a direction toward the pack frames 1100 and 1200.

More specifically, the flow path frame 1300 includes second side frames 1311 and 1315 located at a lower part of the first side frame 1110, and second internal frames 1321a, 1321b, 1321c and 1325 located at a lower part of the first internal frame 1120. Herein, the bottom part of the flow path frame 1300, the second side frames 1311 and 1315, and the second internal frames 1321a, 1321b, 1321c and 1325 may be integrated with each other, or may be fixed to each other by a separate fastening method such as welding or bonding. As an example, the second side frames 1311 and 1315 and the second internal frames 1321a, 1321b, 1321c and 1325 may be made of the same material as the frame sections 1110 and 1120.

The second side frames 1311 and 1315 may include a pair of second horizontal frames 1311 extending along the longitudinal direction (y-axis direction) among the edges of the flow path frame 1300, and a pair of second vertical frames 1315 extending along the width direction (x-axis direction) among the edges of the flow path frame 1300. Herein, the pair of second horizontal frames 1311 and the pair of second vertical frames 1315 may be integrated with each other, or may be fixed to each other by a separate fastening method such as welding or bonding.

The second internal frame 1320 may include at least two vertical flow path beams 1321a, 1321b and 1321c extending along the width direction (x-axis direction) of the flow path frame 1300, and a horizontal flow path beam 1325 extending in a direction (y-axis direction) perpendicular to the vertical flow path beams 1321a, 1321b and 1321c. As an example, the vertical flow path beams 1321a, 1321b and 1321c include a pair of first vertical flow beams and a second vertical flow path beam with the horizontal flow path beam 1325 interposed therebetween, so that the first vertical flow path beam and the second vertical flow path beam may each be attached to the horizontal flow path beam 1325. Herein, the horizontal flow path beam 1325 and at least two vertical flow path beams 1321a, 1321b and 1321c may be integrated with each other, or may be fixed to each other by a separate fastening method such as welding or bonding.

More specifically, the lengths of vertical flow path beams 1321a, 1321b and 1321c and horizontal flow path beams 1325, and the spacing between vertical flow path beams 1321a, 1321b and 1321c adjacent to each other among at least two vertical flow path beams 1321a, 1321b and 1321c may be adjusted depending on the size of the battery module 100 (FIG. 11).

Accordingly, in the battery pack 1000 according to the present embodiment, the second side frame 1310 and the second internal frame 1320 may partition the plurality of flow path parts 1351, 1352, and 1353 each located at the lower part of the plurality of module sections 1150 from each other, and the lower venting flow paths formed in each of the plurality of flow path parts 1351, 1352 and 1353 may also be partitioned from each other. More specifically, the gas and/or flame of the battery module 100 (FIG. 11) in which a thermal runaway phenomenon has occurred may flow into a space divided by the first side frame 1110 and the first internal frame 1120, respectively. In addition, in the battery pack 1000 according to the present embodiment, the materials generated from the plurality of battery modules 100 (FIG. 11) may be partially cooled as they each pass through the inside of the flow path frame 1300, thereby further improving the safety of the battery pack 1000 while preventing heat propagation phenomena between adjacent battery modules.

Referring to FIG. 6, at least one or more partition walls 1351a, 1352a and 1353a may be located in an area partitioned by the second side frames 1311 and 1315 and the second internal frames 1321a, 1321b, 1321c and 1325. In other words, at least one or more partition walls 1351a, 1352a and 1353a may be formed in each of the plurality of flow path parts 13151, 1352 and 1352. More specifically, the flow path frame 1300 may include a first flow path part 1351 located at a lower part of the first module section 1151 (FIGS. 4 and 5), a second flow path part 1352 located at a lower part of the second module section 1152 (FIGS. 4 and 5), and a third flow path part 1353 located at a lower part of the third module section 1153 (FIGS. 4 and 5).

Herein, at least one or more partition walls 1351a, 1352a and 1353a may include at least one first partition wall 1351a formed in the first flow path part 1351, at least one second partition wall 1352a formed in the second flow path part 1352, and at least one third partition wall 1353a formed in the third flow path part 1353. However, unlike those shown in FIG. 6, a structure in which at least one first partition wall 1351a is omitted in the first flow path part 1351 may also be included in the present embodiment.

Herein, the number and arrangement form of the at least one or more partition walls 1351a, 1352a, and 1353a may differ from each other depending on the position of the flow path parts 1351, 1352, and 1353. As an example, as shown in FIG. 6, at least one first partition wall 1351a and at least one second partition wall 1352a may be located separately from each other. Furthermore, at least one third partition wall 1353a may be arranged so that a part of the partition wall comes into contact with each other, and the remaining parts may be located separately from each other. As an example, the third partition wall 1353a may include an "L" shaped partition wall as shown in FIG. 6.

Accordingly, the arrangement form of the at least one or more partition walls 1351a, 1352a and 1353a may become more complicated as the module section 1150 on which the battery module 100 (FIG. 11) is mounted is located more adjacent to the first discharge part 1141. On the contrary, the arrangement form of the at least one or more partition walls 1351a, 1352a and 1353a may become simpler as the module section 1150 on which the battery module 100 (FIG. 11) is mounted is located further away from the first discharge part 1141.

Further, the battery module 100 (FIG. 11) is mounted on the module section 1150 (FIGS. 4 and 5) in a direction in which a side surface of the battery module 100 (FIG. 11) faces the first discharge part 1141 (FIGS. 3 and 4), and as shown in FIG. 6, at least one or more partition walls 1351a, 1352a and 1353a may extend along the width direction (y-axis direction) of the battery module 100 (FIG. 11). However, the shape of the at least one or more partition walls 1351a, 1352a and 1353a is not limited thereto, and may change depending on the arrangement of the battery module 100 (FIG. 11) and the position of the module section 1150 (FIGS. 4 and 5).

Further, in the flow path frame 1300, the number of the partition walls 1351a, 1352a and 1353a formed in each of the flow path parts 1351, 1352 and 1353 is inversely proportional to the distance from the first discharge part 1141 (FIGS. 3 and 4). As an example, as shown in FIG. 6, the number of the at least one second partition wall 1352a may be larger than the number of at least one first partition wall 1351a, and the number of the at least one third partition wall 1353a may be larger than the number of the at least one second partition wall 1352a.

Accordingly, the number of the at least one or more partition walls 1351a, 1352a and 1353a increases as the module section 1150 on which the battery module 100 (FIG. 11) is mounted is located more adjacent to the first discharge part 1141, and the distance over which gas and/or flame flowing into the flow path frame 1300 flows can also be increased.

Further, in the battery pack 1000 according to the present embodiment, the number of the at least one or more partition walls 1351a, 1352a and 1353a varies depending on the position of the module section 1150 on which the battery module 100 (FIG. 11) is mounted, thereby being able to control the distance over which gas and/or flame flowing into the flow path frame 1300 flows. In other words, by adjusting the number of the at least one or more partition walls 1351a, 1352a and 1353a, the gas and/or flame that has flowed into the flow path frame 1300 can be controlled to flow a predetermined distance or more. That is, the gas and/or flame that has flowed into the inside of the flow path frame 1300 can flow through a venting path of a predetermined length or more regardless of the position of the module section 1150, whereby gas and/or flame of the battery module 100 (FIG. 11) in which a thermal runaway phenomenon has occurred may be discharged to the outside in a sufficiently cooled state regardless of the position of the module section 1150.

Referring to FIGS. 5 and 6, a first distance d1 in the at least one first partition wall 1351a between the first partition wall located most adjacent to the first horizontal venting holes 1151a and 1151b among the first module venting holes 1151a, 1151b and 1155 and the side surface of the pack frames 1100 and 1200 may be larger than a second distance d2 in the at least one second partition wall 1352a between a second partition wall located most adjacent to the second horizontal venting holes 1152a and 1152b among the second module vent holes 1152a, 1152b and 1155 and a side surface of the pack frames 1100 and 1200. A first distance d2 in the at least one second partition 1352a between the first partition wall located most adjacent to the second horizontal venting holes 1152a and 1152b among the second module vent holes 1152a, 1152b and 1155 and the side surface of the pack frames 1100 and 1200 may be larger than a third distance d3 in the at least one third partition wall 1353a between a third partition wall located most adjacent to the third horizontal venting holes 1153a and 1153b among the third module venting holes 1153a, 1153b and 1155 and the side surface of the pack frames 1100 and 1200.

Accordingly, the first distance d1, the second distance d2, and the third distance d3 decrease as the module section 1150 on which the battery module 100 (FIG. 11) is mounted becomes more adjacent to the first discharge part, and the distance over which gas and/or flame flowing into the flow path frame 1300 flows may also be increased.

Further, in the battery pack 1000 according to the present embodiment, the first distance d1, the second distance d2, and the third distance d3 are different depending on the position of the module section 1150 to which the battery module 100 (FIG. 11) is mounted, thereby being able to control the distance over which gas and/or flame flowing into the flow path frame 1300 flows. In other words, by adjusting the first distance d1, the second distance d2, and the third distance d3, the gas and/or flame flowing into the flow path frame 1300 can be controlled so as to flow a predetermined distance or more. That is, the gas and/or flame flowing into the flow path frame 1300 can flow through a venting path of a predetermined length or more regardless of the position of the module section 1150, so that gas and/or flame of the battery module 100 (FIG. 11) in which a thermal runaway phenomena has occurred may be discharged to the outside in a sufficiently cooled state regardless of the position of the module section 1150.

Referring to FIG. 6, the vertical flow path beams 1321a, 1321b and 1321c located between pairs of module sections 1150 (FIGS. 4 and 5) adj acent to each other among the at least two vertical flow path beams 1321a, 1321b and 1321c may include at least one or more communication parts 1322b and 1322c.

More specifically, the vertical flow path beams 1321a, 1321b and 1321c may include a first vertical flow path beam 1321b located between the lower part of the first module section 1151 (FIG. 5) and the lower part of the second module section 1152 (FIG. 5), and a second vertical flow path beam 1321c located between the lower part of the second module section 1152 (FIG. 5) and the lower part of the third module section 1153 (FIG. 5). In other words, the first vertical flow path beam 1321b may be located between the first flow path part 1351 and the second flow path part 1352, and the second vertical flow path beam 1321c may be located between the second flow path part 1352 and the third flow path part 1353. Further, the vertical flow path beams 1321a, 1321b and 1321c may include a third vertical flow path beam 1321a located furthest from the first discharge part 1141. In other words, the third vertical flow path beam 1321a may be located most adjacent to the second discharge part 1145.

Herein, the first vertical flow path beam 1321b may include a first communication part 1322b that communicates between the first flow path part 1351 and the second flow path part 1352, and the second vertical flow path beam 1321c may include a second communication part 1322c that communicates between the second flow path part 1352 and the third flow path part 1353.

Accordingly, in the battery pack 1000 according to the present embodiment, the gas and/or flame that has flowed into the flow path parts 1351, 1352 and 1353 from the module section 1150 may flow through the venting path toward the first discharge part 1141, regardless of the position of the module section 1150.

As an example, as shown in FIG. 6, the number of the first communication part 1322b included in the first vertical flow path beam 1321b may be smaller than the number of the second communication part 1322c included in the second vertical flow path beam 1321c. As another example, the length d4 of the first communication part 1322b may be larger than the length d5 of the second communication part 1322c.

Accordingly, in the battery pack 1000 according to the present embodiment, the gas and/or flame that has flowed into the flow path parts 1351, 1352 and 1353 from the module section 1150 may adjust the length of the venting path based on the difference in the number and/or length of the first communication part 1322b and the second communication part 1322c. In particular, the battery pack 1000 according to the present embodiment allows the gas and/or flame discharged from the module section1150 located adjacent to the first discharge part 1141 to move a venting path of a sufficient distance or more, thereby allowing the gas and/or flame discharged from the module section 1150 located adjacent to the first discharge part 1141 to be sufficiently cooled.

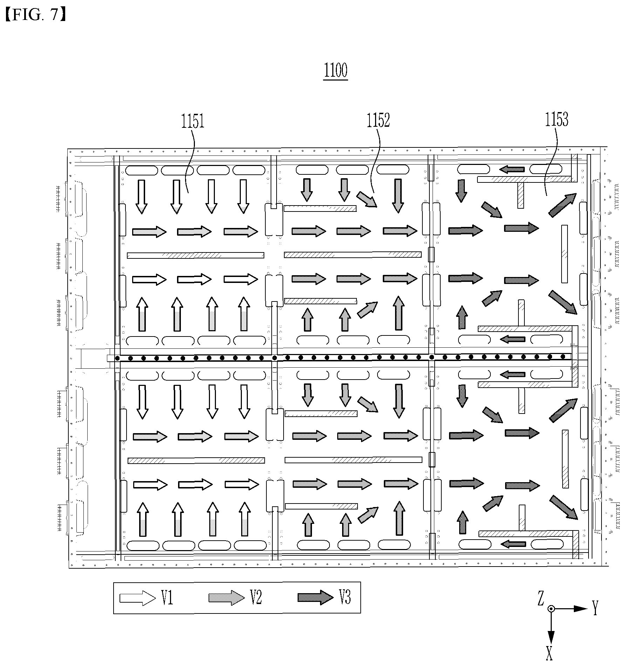

FIG. 7 is a diagram showing the flow of venting gas discharged to the lower part of the battery module in a state where the lower pack frame and the flow path frame of FIG. 3 are combined.

Referring to FIGS. 3 to 7, the gas and/or flame of the battery module 100 (FIG. 11) in which a thermal runaway phenomenon has occurred among the battery modules 100 (FIG. 11) mounted on each module section 1150 may flow into the flow path parts 1351, 1352 and 1353 through the module venting holes 1151a, 1151b, 1152a, 1152b, 1153a, 1153b and 1155 formed in the module section 1150. In addition, the gas and/or flame flowing into respective flow path parts 1351, 1352 and 1353 may flow along the lower venting flow path formed by the second side frames 1311 and 1315, the second internal frames 1321a, 1321b, 1321c and 1325, and at least one or more partition walls 1351a, 1352a and 1353a.

At this time, depending on the position of the module section 1150 or the flow path parts 1351, 1352 and 1353, the length of the lower venting flow path may be adjusted to be different from each other based on the number, shape, distance, and the like of the communication parts 1322b and 1322c and the partition walls 1351a, 1352a and 1353a formed in some of the vertical flow path beams 1321a, 1321b and 1321c.

Referring to FIGS. 3 to 7, the second lower venting flow path V2 formed in the second flow path part 1352 may be formed longer than the first lower venting flow path V1 formed in the first flow path part 1351, and the third lower venting flow path V3 formed in the third flow path part 1353 may be formed longer than the second lower venting flow path V2 formed in the second flow path part 1352.

Herein, the lower venting flow paths V1, V2 and V3 may be flow paths that move in a direction toward the first discharge part 1141 along the space partitioned by at least one or more partition walls 1351a, 1352a and 1353a formed in the flow path parts 1351, 1352 and 1353 from the module venting holes 1151a, 1151b, 1152a, 1152b, 1153a, 1153b and 1155.

More specifically, the lower venting flow paths V1, V2 and V3 may be paths from the horizontal venting holes 1151a, 1151b, 1152a, 1152b, 1153a and 1153b formed at positions adjacent to the front and rear surfaces of the battery module 100 (FIG. 11) to the outer surface of the flow path parts 1351, 1352 and 1353 adjacent to the first discharge part 1141.

As an example, the first lower venting flow path V1 may move along a space in which the material flowing into the first flow path part 1351 from the first horizontal venting holes 1151a and 1151b is partitioned by at least one first partition wall 1351a, and may can move to the outside surface of the first flow path part 1351 adjacent to the first discharge part 1141. In other words, the first lower venting flow path V1 may be a path from the first horizontal venting holes 1151a and 1151b to the first communication part 1322b formed between the first flow path part 1351 and the second flow path part 1352.

Herein, the material flowing along the first lower venting flow path V1 moves toward the first communication part 1322b, and the material flowing into the first communication part 1322b may move toward the first discharge part 1141 through the second flow path part 1352 and the third flow path part 1353.

Similarly, the second lower venting flow path V2 moves along a space in which the material flowing into the second flow path part 1352 from the second horizontal venting holes 1152a and 1152b is partitioned by at least one second partition wall 1352a, and may move to the outside surface of the second flow path part 1352 adjacent to the first discharge part 1141. In other words, the second lower venting flow path V2 may be a path from the second horizontal venting holes 1152a and 1152b to the second communication part 1322c formed between the second flow path part 1352 and the third flow path part 1353. At this time, the second flow path part 1352 includes a relatively larger number of second partition walls 1352a than the first flow path part 1351, so that the second lower venting flow path V2 may be formed to be relatively longer than the first lower venting flow path V1.

Herein, the material flowing along the second lower venting flow path V2 moves toward the second communication part 1322c, and the material flowing into the second communication part 1322c may move toward the first discharge part 1141 through the third flow path part 1353.

Further, the third lower venting flow path V3 moves along a space in which the material flowing into the third flow path part 1353 from the third horizontal venting holes 1153a and 1153b is partitioned by at least one third partition wall 1352a, and may move to the outside surface of the third flow path part 1353 adjacent to the first discharge part 1141. In other words, the third lower venting flow path V3 may be a path from the third horizontal venting holes 1153a and 1153b to the first pack venting hole 1165 located at the upper part of the third flow path part 1353. At this time, the third flow path part 1353 includes a relatively larger number of third partition wall 1353a than the second flow path part 1352, so that the third lower venting flow path V3 may be formed to be relatively longer than the second lower venting flow path V2.

That is, in the battery pack 1000 according to the present embodiment, the gas and/or flame generated in the battery module 100 (FIG. 11) may move along the above-mentioned lower venting flow paths V1, V2, and V3, the gas and/or flame flowing along respective lower venting flow paths V1, V2 and V3 flows into the first pack venting hole 1165, and the gas and/or flame flowing into the first pack venting hole 1165 may move toward the first discharge part 1141.

Accordingly, in the battery pack 1000 according to the present embodiment, even in the case of the third module section 1153 which is located most adjacent to the first discharge part 1141 among the plurality of module sections 1150, the gas and/or flame flowing into the third flow path part 1353 moves along the third lower venting flow path V3, which is formed to be relatively longer than the first flow path part 1351 and the second flow path part 1352, so that the gas and/or flame flowing into the third flow path part 1353 may be discharged to the outside in a sufficiently cooled state.

Further, in the battery pack 1000 according to the present embodiment, the gas and/or flame flowing into the flow path frame 1300 can flow through a venting path of a predetermined length or more regardless of the position of the module section 1150, so that the gas and/or flame of the battery module 100 (FIG. 11) in which a thermal runaway phenomenon has occurred may be discharged to the outside in a sufficiently cooled state regardless of the position of the module section 1150, and the gas and/or flame discharged to the outside can be prevented from causing an external flame and explosion.

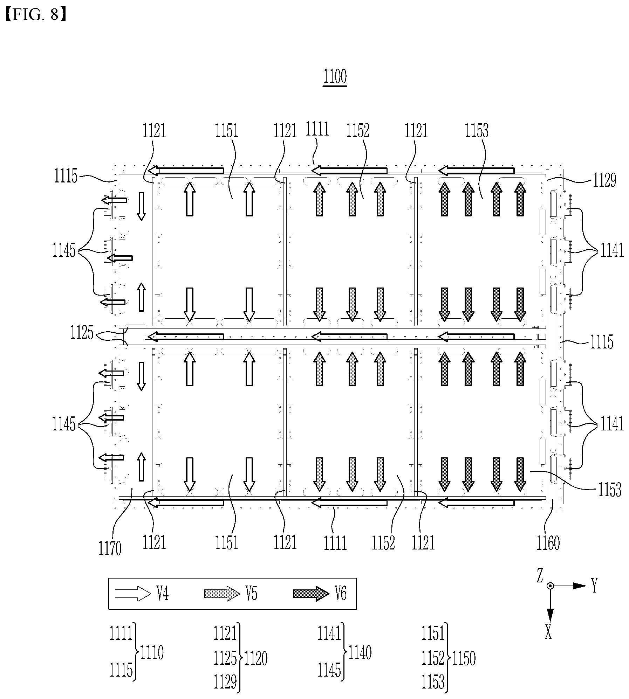

FIG. 8 is a diagram showing the flow of venting gas discharged to the side surface of the battery module in a state where the lower pack frame and the flow path frame of FIG. 3 are combined.

Referring to FIGS. 3 and 8, in the battery pack 1000 according to an embodiment of the present disclosure, the first side frame 1110 and the internal frame 1120 may include at least one or more frame venting holes 1111a, 1111b, 1111c, 1125a, 1125b and 1125c formed at a position in contact with the outer surface of the battery module 100 (FIG. 11) mounted on the module sections 1151, 1152 and 1153. Herein, the frame venting holes 1111a, 1111b, 1111c, 1125a, 1125b and 1125c may include first frame venting holes 1111a, 1111b and 1111c formed in the first side frame 1111 and second frame venting holes 1125a, 1125b and 1125c formed in the internal frame.

Herein, the inside of the first side frame 1110 and the inside of the internal frame 1120 may have an empty structure. In addition, the frame venting holes 1111a, 1111b, 1111c, 1125a, 1125b and 1125c may have a shape penetrating toward the inside of the first side frame 1110 or the inside of the internal frame 1120.

Accordingly, the materials discharged from the battery module 100 (FIG. 11) in which a thermal runaway phenomenon has occurred may flow into the frame venting holes 1111a, 1111b, 1111c, 1125a, 1125b and 1125c, and the materials 1111a, 1111b, 1111c, 1125a, 1125b and 1125c flowing into the frame venting holes may move along the inside of the first side frame 1110 and the inside of the internal frame 1120.

In the first side frame 1110, the first horizontal frame 1111 may include at least one or more first frame venting holes 1111a, 1111b and 1111c. In addition, the first frame venting holes 1111a, 1111b and 1111c may include a first frame venting hole 1111a formed in the first module section 1151, a first frame venting hole 1111b formed in the second module section 1152, and a first frame venting hole 1111c formed in the third module section 1153.

More specifically, in the first side frame 1110, the number of the first frame venting holes 1111a, 1111b and 1111c each formed in the module section 1150 may vary depending on the distance between the second discharge part 1145 and the module section 1150. As an example, as shown in FIG. 3, the number of the first frame venting hole 1111a formed in the first module section 1151 may be smaller than the number of the first frame venting hole 1111b formed in the second module section 1152. In addition, the number of the first frame venting hole 1111b formed in the second module section 1152 may be smaller than the number of the first frame venting hole 1111c formed in the third module section 1153. However, the number of the first frame venting holes 1111a, 1111b and 1111c is not limited to those shown in FIG. 3, and the number of the first frame venting holes 1111a, 1111b and 1111c can be adjusted as necessary.

That is, in the battery pack 1000 according to the present embodiment, the number of the first frame venting holes 1111a, 1111b and 1111c decreases as the module section 1150 on which the battery module 100 (FIG. 11) is mounted is located more adjacent to the second discharge part 1145, and the speed at which gas and/or flame is discharged to the first frame venting holes 1111a, 1111b and 1111c may decrease as it is located more adjacent to the second discharge part 1145.

Accordingly, in the battery pack 1000 according to the present embodiment, the number of the first frame venting holes 1111a, 1111b and 1111c varies depending on the position of the module section 1150 on which the battery module 100 (FIG. 11) is mounted, thereby being able to control the speed of discharge from the battery module 100 (FIG. 11) to the first frame venting holes 1111a, 1111b and 1111c. In other words, by adjusting the number of the first frame venting holes 1111a, 1111b and 1111c, it is possible to control the speed at which gas and/or flame of the battery module 100 (FIG. 11) in which a thermal runaway phenomenon has occurred flows into the first side frame 1110.

In the internal frame 1120, the horizontal beam 1125 may include at least one or more second frame venting holes 1125a, 1125b and 1125c. In addition, the second frame venting holes 1125a, 1125b and 1125c may include a second frame venting hole 1125a formed in the first module section 1151, a second frame venting hole 1125b formed in the second module section 1152, and a second frame venting hole 1125c formed in the third module section 1153.

More specifically, in the internal frame 1120, the number of the second frame venting holes 1125a, 1125b and 1125c each formed in the module section 1150 may vary depending on the distance between the second discharge part 1145 and the module section 1150. As an example, as shown in FIG. 3, the number of the second frame venting hole 1125a formed in the first module section 1151 may be smaller than the number of the second frame venting hole 1125b formed in the second module section 1152. Further, the number of the second frame venting hole 1125b formed in the second module section 1152 may be smaller than the number of the second frame venting hole 1125c formed in the third module section 1153. However, the number of the second frame venting holes 1125a, 1125b and 1125c is not limited to those shown in FIG. 3, and the number of the second frame venting holes 1125a, 1125b and 1125c can be adjusted as necessary.

That is, in the battery pack 1000 according to the present embodiment, the number of the second frame venting holes 1125a, 1125b and 1125c decreases as the module section 1150 on which the battery module 100 (FIG. 11) is mounted is located more adjacent to the second discharge part 1145, and the speed at which gas and/or flame is discharged into the second frame venting holes 1125a, 1125b, and 1125c may decrease as it is located more adjacent to the second discharge part 1145.

Accordingly, in the battery pack 1000 according to the present embodiment, the number of the second frame venting holes 1125a, 1125b and 1125c varies depending on the position of the module section 1150 on which the battery module 100 (FIG. 11) is mounted, thereby being able to control the speed of discharge from the battery module 100 (FIG. 11) to the second frame venting holes 1125a, 1125b and 1125c. In other words, by adjusting the number of the second frame venting holes 1125a, 1125b and 1125c, the speed at which gas and/or flame of the battery module 100 (FIG. 11) in which a thermal runaway phenomenon has occurred flows into the internal frame 1200.

Referring to FIGS. 3 and 8, in the battery pack 1000 according to the present embodiment, the first side frame 1110 and the internal frame 1120 may further include at least one or more side venting holes 1111d and 1125d formed between the other side surface of the pack frames 1100 and 1200 where the second discharge part 1145 is located and the first module section 1151. More specifically, in the first side frame 1110 and the internal frame 1120, the side venting holes 1111d and 1125d may be formed in the second space part 1170, respectively. The side venting holes 1111d and 1125d may include a first side venting hole 1111d formed in the first side frame 1111 and a second side venting hole 1125d formed in the internal frame.

Herein, the side venting holes 1111d and 1125d may have a shape penetrating toward the inside of the first side frame 1110 or the inside of the internal frame 1120. More specifically, the side venting holes 1111d and 1125d may have a shape penetrating toward the second space part 1170.

Accordingly, in the battery pack 1000 according to the present embodiment, the materials that have moved along the inside of the first side frame 1110 and the inside of the internal frame 1120 from the battery module 100 (FIG. 11) in which a thermal runaway phenomenon has occurred may move toward the second discharge section 1145 through the side venting holes 1111d and 1125d. That is, the materials that have moved toward the second space part 1170 through the side venting holes 1111d and 1125d may be discharged to the outside through the second discharge part 1145.

Herein, as shown in FIGS. 3 and 8, the second space part 1170 may be mounted with other electrical components and control systems such as BMS as mentioned above, and thus may have a relatively wider width and/or size than the first space part 1160. At this time, in the case of the first space part 1160, the distance between the module section 1150 and the side surfaces of the pack frames 1100 and 1200 may be relatively more adjacent than in the second space part.

At this time, unlike those shown in FIGS. 3 and 8, when side venting holes 1111d and 1125d are formed in the first space part 1160, a spark may be discharged to the first discharge part 1141 when a thermal runaway phenomenon occurs in the battery module 100 (FIG. 11) most adjacent to the first space part 1160. In addition, the gas and/or flame discharged to the first discharge part 1141 may not be sufficiently cooled, which may cause an external flame.

Accordingly, in the battery pack 1000 according to an embodiment of the present disclosure, the side venting holes 1111d and 1125d are formed in the second space part 1170, so that the distance between the module section 1150 and the side surfaces of the pack frames 1100 and 1200 can be located relatively far. That is, even if a thermal runaway occurs in the battery module 100 (FIG. 11) most adjacent to the second space part 1170, it is possible to minimize the risk of sparks and insufficiently cooled gas and/or flames being discharged to the outside through the second discharge part 1145.

Referring to FIGS. 3 and 8, the battery pack 1000 according to the present embodiment may have side venting flow paths V4, V5 and V6 in which the materials flowing into the frame venting holes 1111a, 1111b, 1111c, 1125a, 1125b and 1125c move toward the second discharge part 11 through the side venting holes 1111d and 1125d.

Herein, the side venting flow paths V4, V5 and V6 may be flow paths that move in a direction toward the second discharge part 1145 through the frame venting holes 1111a, 1111b, 1111c, 1125a, 1125b and 1125c, the inner space of the first side frame 1110 and the internal frame 1120, and the space passing through the side venting holes 1111d and 1125d.

The first side venting flow path V4 may be a path along which material flowing into the inner space of the first side frame 1110 from the first frame venting hole 1111a formed in the first module section 1151 moves to the first side venting hole 1111d, and moves up to the second space part 1170 adjacent to the second discharge part 1145. Further, the first side venting flow path V4 may be a path along which the material flowing into the inner space of the internal frame 1120 from the second frame venting hole 1125a formed in the first module section 1151 moves to the second side venting hole 1125d, and moves up to the second space section 1170 adjacent to the second discharge part 1145. The second side vent flow path V5 and the third side vent flow path V6 can be similarly described.

That is, in the battery pack 1000 according to the present embodiment, the gas and/or flame generated in the battery module 100 (FIG. 11) may move along the above-mentioned side venting flow paths V4, V5 and V6, and the gas and/or flame flowing along respective side venting flow paths V4, V5 and V6 may move toward the second discharge section 1145.

Accordingly, in the battery pack 1000 according to the present embodiment, in addition to the above-mentioned lower venting flow paths V1, V2 and V3 (FIG. 7), the gas and/or flame can be additionally discharged through the side venting flow paths V4, V5 and V6, so that the gas and/or flame can be vented effectively in a relatively short period of time.

Further, the side venting flow paths V4, V5 and V6 of the battery pack 1000 according to the present embodiment may adjust the speed of being flowed into the first side frame 1110 and the internal frame 1120 depending on the position of the module section 1150, so that the gas and/or flame in the battery module 100, FIG. 11, in which a thermal runaway phenomenon has occurred may be discharged to the outside in a sufficiently cooled state regardless of the position of the module section 1150, and the gas and/or flame discharged to the outside can be prevented from causing external flame and explosion.

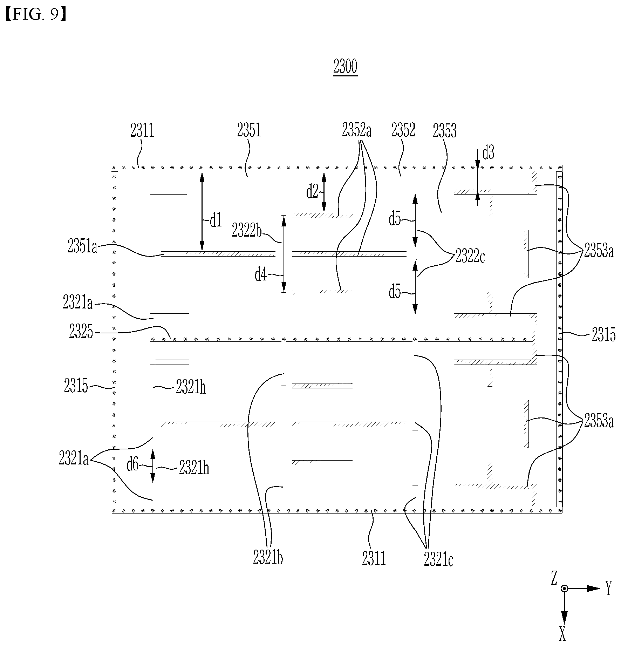

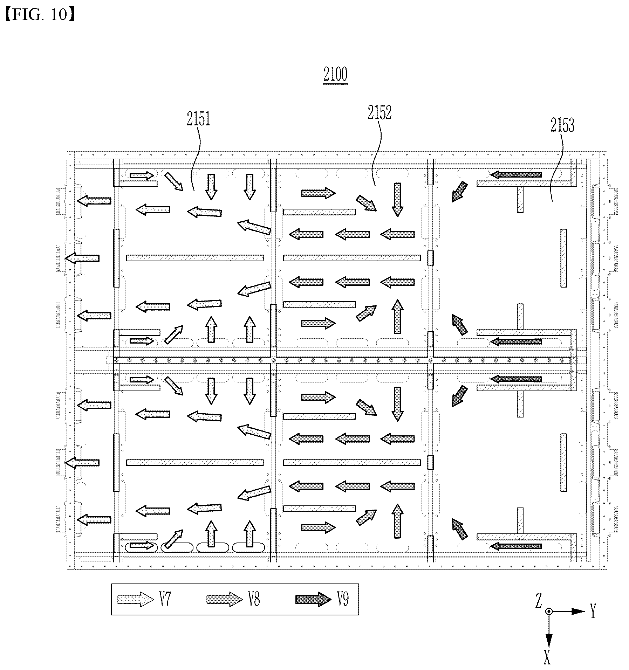

FIG. 9 is a top view of a flow path frame according to another embodiment of the present disclosure. FIG. 10 is a diagram showing the flow of venting gas discharged to the lower part of the battery module in a state where the lower pack frame of FIG. 3 and the flow path frame of FIG. 9 are combined.

The flow path frame 2300 according to the present embodiment can be described mostly in the same manner as the flow path frame 1300 of FIG. 6, and only the different parts will be described with reference to FIGS. 9 and 10.

Referring to FIGS. 4, 5, and 9, in the vertical flow path beams 2321a, 2321b and 2321c, the third vertical flow path beam 2321a may be formed between the side surface of the flow path frame 2300 located adjacent to the second discharge part 1145 and the lower part of the first module section 1151. Further, the third vertical flow path beam 2321a may be formed with at least one flow path venting hole 2321h.

Further, the flow path venting hole 2321h may be located between the first partition wall 2351a formed in the first flow path part 2351 and the horizontal flow path beam 2325. Further, the length d6 of the flow path venting hole 2321h may be smaller than the length of the first communication part 2322b. However, the position and length of the flow path venting hole 2321h are not limited thereto, and may be adjusted appropriately as necessary.

Herein, as shown in FIGS. 4, 5, and 9, the flow path venting hole 2321h allows the space between the side surface of the flow path frame 2300 located adjacent to the second discharge part 1145 and the third vertical flow path beam 2321a to communicate with the first flow path part 2351. More specifically, in the flow path frame 2300, a space located at a lower part of the second space par 1170 may communicate with the first flow path part 2351 through the flow path venting hole 2321h.

Referring to FIGS. 9 and 10, the material that has flowed into the first flow path part 2351 from the battery module 100 (FIG. 11) in which a thermal runaway phenomenon has occurred may move to the lower part of the second space part 1170 through the flow path venting hole 2321a. Further, the material that has moved to the lower part of the second space part 1170 can move to the second space part 1170 through the second pack venting hole 1175 formed in the second space part 1170, and the materials that have moved to the second space part 1170 may move toward the second discharge part 1145.

Referring to FIG. 10, as previously described, in the flow path frame 2300, the material that has flowed into the second flow path part 2352 and the third flow path part 2353 may also flow into the first flow path part 2351 through the communication parts 1322b and 1322c. Accordingly, the materials that has flowed into the second flow path part 2352 and the third flow path part 2353 may also move through the additional lower venting paths V7, V8 and V9 toward the second discharge part 1145.

Accordingly, in the battery pack 1000 according to the present embodiment, in addition to the above-mentioned lower venting flow paths V1, V2 and V3 (FIG. 7), the gas and/or flame can be discharged through additional lower venting flow paths V7, V8 and V9, so that the gas and/or flame can be vented effectively in a relatively short period of time.

Further, in this case, the material that has flowed into the flow path frame 2300 from the battery module 100 (FIG. 11) in which a thermal runaway phenomenon has occurred may move through both the lower vent flow paths V1, V2 and V3 (FIG. 7) and the additional lower venting flow paths V7, V8 and V9. Herein, in the second discharge part 1145, the gas and/or flame moves through the side venting flow paths V4, V5 and V6 (FIG. 8) in addition to the additional lower venting flow paths V7, V8, and V9, so that the pressure may be relatively higher than the portion where the first discharge part 1141 is located. Through such a pressure difference, the gas and/or flame that has flowed into the flow path frame 2300 may move in a relatively larger amount through the lower venting flow paths V7, V8 and V9 than through the additional lower venting flow paths V7, V8 and V9.

Further, the third vertical flow path beam 2321a may include a partition wall having a shape that allow the movement of the material flowing from the first horizontal venting holes 1151a and 1151b to be bypassed. As an example, as shown in FIG. 9, the third vertical flow path beam 2321a may include an "L"-shaped partition wall located at a lower part of the first horizontal venting holes 1151a and 1151b. However, the shape of the third vertical flow path beam 2321a is not limited thereto, and can be included in the present embodiment as long as it is a shape that allows the movement of material flowing from the first horizontal venting holes 1151a and 1151b to be bypassed.

Accordingly, even if the flow path venting hole 2321h is formed in the third vertical flow path beam 2321a, the third vertical flow path beam 2321a includes a partition wall having a shape that allows the movement of the material flowing from the first horizontal venting holes 1151a and 1151b to be bypassed, so that materials flowing in from the first horizontal venting holes 1151a and 1151b can be prevented from being discharged to the second discharge part 1145 via a relatively short distance.

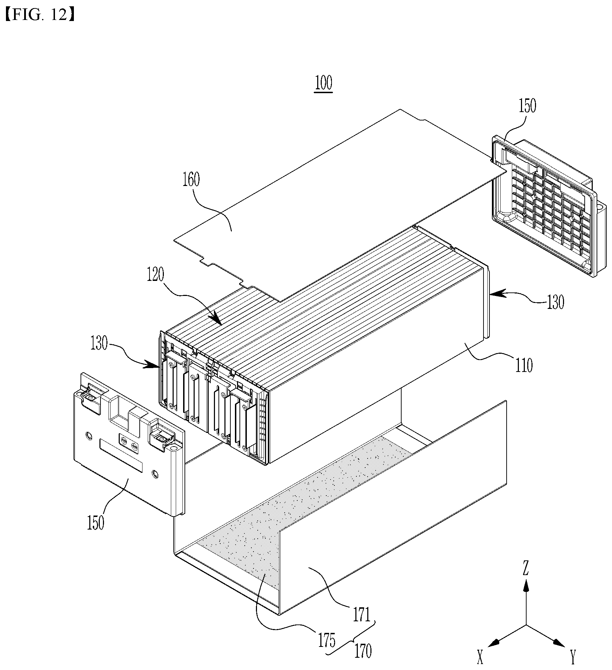

FIG. 11 is a perspective view showing a battery module mounted on the battery pack of FIG. 1. FIG. 12 is an exploded perspective view of the battery module of FIG. 11.

Referring to FIGS. 1, 11 and 12, a plurality of battery modules 100 included in the battery pack 1000 according to the present embodiment may be mounted on the lower pack frame 1100. More specifically, the plurality of battery modules 100 may each be mounted to an area partitioned by the first side frame 1110 and the first internal frame 1120 as shown in FIGS. 3 to 5. However, the arrangement direction of the battery module 100 is not limited thereto, and may be appropriately changed as necessary.

As an example, the battery module 100 includes a battery cell stack 110 in which a plurality of battery cells 110 are stacked, and module frames 160 and 170 that house the battery cell stack 120, as shown in FIGS. 11 and 12.

The battery cell 110 is preferably a pouch type battery cell. As an example, the battery cell 110 may be produced by housing the electrode assembly in a pouch case of a laminate sheet including a resin layer and an inner layer, and then heat-sealing a sealing part of the pouch case. Such a battery cell 110 may be formed in a rectangular sheet-like structure. The battery cells 110 may be configured by a plurality of numbers, and the plurality of battery cells 110 are stacked so as to be electrically connected to each other, thereby forming a battery cell stack 120. Wherein, the number of battery cells 110 forming the battery cell stack 120 may be adjusted according to the case.

The module frames 160 and 170 may include an upper cover 160 and a U-shaped frame 170. In addition, it includes a thermally conductive resin layer 175 located between the battery cell stack 120 and the lower part of the module frames 160 and 170.

Herein, the U-shaped frame 170 may include a bottom part and two side surface parts extending upward from both ends of the bottom part. At this time, the bottom part may cover the lower surface of the battery cell stack 120, and the side surface part may cover the side surface of the battery cell stack 120. The upper cover 160 and the U-shaped frame 170 can be coupled by welding or the like in a state in which the corner portions corresponding to each other are in contact with each other, to thereby form a structure that covers the top, bottom, left and right of the battery cell stack 120. For this purpose, the upper cover 160 and the U-shaped frame 170 may be made of a metal material having a predetermined strength.

In another example, although not illustrated in FIGS. 11 and 12, the module frames 160 and 170 may be replaced with a metal plate-shaped mono frame in which the upper and lower surfaces and both side surfaces integrated. In another example, the module frames 160 and 170 may be replaced with a shape in which two L-shaped frames are coupled. In another example, the module frames 160 and 170 may be replaced with a frame of a 4-plate structure in which an upper surface plate, a lower surface plate, a left plate, and a right plate are coupled. However, the present disclosure is not limited thereto, and any frame can be applied to the present embodiment as long as it can protect the internal components of the battery module 100.

In addition, the battery module 100 further includes a busbar frame 130 located on the front and rear surfaces of the battery cell stack 120, respectively, and an end plate 150 that covers the busbar frame 130. Herein, a busbar (not shown) electrically connected to the battery cell stack 120 may be located in the busbar frame 130. Thereby, the end plate 150 can physically protect the battery cell stack 120 and other electrical components from external impact.

The battery module 100 according to another embodiment of the present disclosure may have a structure in which at least some of the components such as the module frames 160 and 170, the end plate 150, and the busbar frame 130 are omitted in the battery module 100 of FIGS. 11 and 12. In other words, the battery module 100 may have a structure in which the components in the battery module unit are minimized. In one example, the battery module 100 may have a structure in which the module frames 160 and 170 and/or the end plate 150 are omitted.

Thereby, the battery pack 1000 according to the present embodiment may have a structure in which at least some of the components of the battery module 100 are omitted, thereby reducing the weight of the battery pack 1000, and also further increasing the space utilization rate inside the battery pack 1000.

According to yet another embodiment of the present disclosure, there can be provided a device comprising the above-mentioned battery pack. Such a device can be applied to vehicle means such as an electric bike, an electric vehicle, and a hybrid electric vehicle, but the present disclosure is not limited thereto, and is applicable to various devices that can use a battery module and a battery pack including the same, which also falls under the scope of the present disclosure.

Although the invention has been described in detail with reference to preferred embodiments of the present disclosure, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
120: battery cell stack
130: busbar frame
150: end plate
160: upper plate
170: module frame
1000: battery pack
1100: lower pack frame
1200: upper pack frame
1300: flow path frame
1400: discharge part

## Claims

1. A battery pack comprising:
a pack frame in which a plurality of battery modules are respectively mounted on a plurality of module sections that are partitioned from each other;
a flow path frame located at a lower part of the pack frame; and
at least one first discharge part located on one side surface of the pack frame,
wherein the plurality of module sections includes a first module section and a second module section that are arranged side by side in one direction, with the second module section being located more adjacent to the first discharge part than the first module section,
wherein the flow path frame includes a first flow path part located at a lower part of the first module section and a second flow path part located at a lower part of the second module section, and
wherein the second lower venting flow path formed in the second flow path part is formed to be longer than the first lower venting flow path formed in the first flow path part.

2. The battery pack according to claim 1, wherein:
the flow path frame includes a flow path bottom part and at least one partition wall extending from the flow path bottom part in a direction toward the pack frame, and
the number of the partition walls formed in the first flow path part is smaller than the number of the partition walls formed in the second flow path part.

3. The battery pack according to claim 2, wherein:
the battery module is mounted on the module section in a direction in which a side surface of the battery module faces the first discharge part, and
the at least one partition wall extends along the width direction of the battery module.

4. The battery pack according to claim 2, wherein:
the first module section includes at least one first module venting hole, and
the second module section includes at least one second module venting hole,
wherein the first module venting hole penetrates toward the first flow path part, and the second module venting hole penetrates toward the second flow path part.

5. The battery pack according to claim 4, wherein:
a first distance between a first partition wall located most adjacent to the first module venting hole among the at least one first partition wall and the side surface of the pack frame is larger than a second distance between a second partition wall located most adjacent to the second module venting hole among the at least one second partition wall and the side surface of the pack frame.

6. The battery pack according to claim 4, wherein:
the first lower venting flow path is a flow path that moves from the first module venting hole in a direction toward the first discharge part along a space partitioned by the at least one partition wall formed in the first flow path, and
the second lower venting flow path is a flow path that moves from the second module venting hole in a direction toward the first discharge part along a space partitioned by the at least one partition wall formed in the second flow path.

7. The battery pack according to claim 4, wherein:
the first module venting hole is located adjacent to a corner of the first module section,
the second module venting hole is located adjacent to a corner of the second module section, and
the number of the second module venting hole is smaller than the number of the first module venting hole.

8. The battery pack according to claim 6, wherein:
the plurality of battery modules include a first battery module and a second battery module,
the first battery module is mounted on the first module section in a direction in which a side surface of the first battery module faces the first discharge part, and
the second battery module is mounted on the second module section in a direction in which a side surface of the second battery module faces the first discharge part.

9. The battery pack according to claim 8, wherein:
the first module venting hole includes a first horizontal venting hole formed at a position adjacent to the front and rear surfaces of the first battery module,
the second module venting hole includes a second horizontal venting hole formed at a position adjacent to the front and rear surfaces of the second battery module, and
the number of the second horizontal venting hole is smaller than the number of the first horizontal venting hole.

10. The battery pack according to claim 8, wherein:
the first lower venting flow path is a path from the first horizontal venting hole to the outside surface of the first flow path part adjacent to the first discharge part, and
the second lower venting flow path is a path from the horizontal venting hole to the outside surface of the second flow path part adjacent to the first discharge part.

11. The battery pack according to claim 1, wherein:
the pack frame further includes at least one first pack venting hole formed at a lower part of the pack frame, and
the first pack venting hole is located between one side surface of the pack frame where the first discharge part is located and the second module section.

12. The battery pack according to claim 11, wherein:
the first flow path part and the second flow path part are communicated with each other, and
the material flowing into the first lower venting flow path and the second lower venting flow path moves toward the first discharge part through the first pack venting hole.

13. The battery pack according to claim 1, wherein:
the pack frame includes a pack bottom part that contacts the lower surface of the battery module and a frame section that surrounds the side surface of the battery module,
the frame section includes a first side frame extending from an edge of the pack bottom part toward the upper part, and a first internal frame located inside the first side frame, and
the plurality of module sections are partitioned from each other by the first side frame and the first internal frame.

14. The battery pack according to claim 13, wherein:
the flow path frame includes a second side frame located at a lower part of the first side frame and a second internal frame located at a lower part of the first internal frame, and
the first flow path part and the second flow path part are partitioned from each other by the second side frame and the second internal frame.

15. The battery pack according to claim 14, wherein:
the second internal frame includes a horizontal flow path beam extending along the width direction of the battery module, and at least two vertical flow path beams extending in a direction perpendicular to the horizontal flow path beam, and
a vertical flow path beam located between a pair of module sections adjacent to each other among the at least two vertical flow path beams includes at least one communication part.

16. The battery pack according to claim 15, wherein:
the plurality of module sections further include a third module section that is arranged in one direction with the first module section and the second module section,
the third module section is located more adjacent to the first discharge part than the second module section,
the vertical flow path beam includes a first vertical flow path beam located between the lower part of the first module section and the lower part of the second module section, and a second vertical flow path beam located between the lower part of the second module section and the lower part of the third module section, and
the number of the first communication part included in the first vertical flow path beam is smaller than the number of the second communication part included in the second vertical flow path beam.

17. The battery pack according to claim 16, wherein:
the length of the first communication part is larger than the length of the second communication part

18. The battery pack according to claim 14, wherein:
the battery pack includes at least one second discharge part located on the other side of the pack frame, and
the first side frame and the internal frame include at least one frame venting hole each formed at a position of contacting an outer surface of the battery module mounted on the module section.

19. The battery pack according to claim 18, wherein:
the first side frame and the internal frame further include at least one side venting hole each formed between the other side surface of the pack frame where the second discharge part is located and the first module section, and
the battery pack has a side venting flow path through which material flowing into the frame venting hole moves toward the second discharge part through the side venting hole.

20. The battery pack according to claim 19, wherein:
the vertical flow path beam further includes a third vertical flow path beam formed between a side surface of the flow path frame located adjacent to the second discharge part and a lower part of the first module section,
the pack frame further includes at least one second pack venting hole formed at a lower part of the pack frame,
the third vertical flow path beam is formed with at least one flow path venting hole,
the second pack venting hole is located between the other side surface of the pack frame where the second discharge part is located and the first module section, and
the material flowing into the flow path venting hole moves toward the second discharge part through the pack venting hole.
